# EUROPÄISCHE PATENTSCHRIFT

(11) **EP 2 071 510 B1**
(45) Veröffentlichungstag und Bekanntmachung des Hinweises auf die Patenterteilung: **13.06.2018**
(21) Anmeldenummer: 08021106.3
(22) Anmeldetag: 04.12.2008
(51) Int. Cl.: G06T 3/00, G06T 7/00, G06T 1/00

(54) **Verfahren und System zur Ausrichtung eines virtuellen Modells an einem realen Objekt**
Method and system for aligning an object of a virtual model to a real object
Procédé et système destinés à aligner un modèle virtuel sur un objet réel

(30) Priorität: 11.12.2007 DE 102007059478
(43) Veröffentlichungstag der Anmeldung: 17.06.2009
(73) Patentinhaber: KUKA Roboter GmbH, 86165 Augsburg (DE)
(72) Erfinder: Kogan, Yevgen, 86152 Augsburg (DE)
(74) Vertreter: Schlotter, Alexander Carolus Paul

(56) Entgegenhaltungen:
- US-A1- 2005 159 916
- US-A1- 2005 215 879
- HERVE J-Y ET AL: "Dynamic registration for augmented reality in telerobotics applications" SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, Bd. 2, 8. Oktober 2000 (2000-10-08), Seiten 1348-1353, XP010524844 ISBN: 978-0-7803-6583-4
- BISCHOFF R ET AL: "Perspectives on augmented reality based human-robot interaction with industrial robots" INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, Bd. 4, 28. September 2004 (2004-09-28), Seiten 3226-3231, XP010766188 ISBN: 978-0-7803-8463-7
- Bischoff, R. ; Kurth U.: "Concepts, Tools and Devices for Facilitating Human-Robot Interaction with Industrial Robots through Augmented Reality" 22. Oktober 2006 (2006-10-22), Seiten 1-35, XP002554120 Gefunden im Internet: URL:http://www.ismar06.org/data/2a-KUKA.pd f> [gefunden am 2009-10-20]
- FIALA M: "Comparing ARTag and ARToolkit plus fiducial marker systems" HAPTIC AUDIO VISUAL ENVIRONMENTS AND THEIR APPLICATIONS, 2005 IREE INT ERNATIONAL WORKSHO ON OCT. 1, 2005, PISCATAWAY, NJ, USA,IEEE, 1. Oktober 2005 (2005-10-01), Seiten 147-152, XP010858685 ISBN: 978-0-7803-9376-9

## Beschreibung

Die vorliegende Erfindung betrifft ein Verfahren sowie ein System zur Ausrichtung eines virtuellen Modells an einem realen Objekt, insbesondere in einem Augmented Reality System.

Beispielsweise in der Simulation, Planung und Regelung von einzelnen Manipulatoren oder gesamter Produktionsanlagen wird heutzutage zunehmend eine sogenannte erweiterte Realität ("Augmented Reality") eingesetzt. Augmented Reality Systeme ermöglichen die Überlagerung von Bildern der realen Umgebung, wie sie über eine Kamera, das menschliche Auge oder dergleichen wahrgenommen werden, mit virtuellen, computergenerierten Informationen und können dadurch beispielsweise einen Operator bei der Bedienung eines Roboters unterstützen.

Der Einsatz von Augmented Reality Systemen in Produktionsanlagen ist beispielsweise aus der DE 198 32 974 A1 und der DE 101 28 015 A1 bekannt.

Zusätzlich ist aus der DE 103 01 849 A1 ein System und Verfahren zur statischen Einblendung von virtuellen Objekten in reale Umgebungen bekannt. Dabei wird die reale Umgebung mittels einer Kamera aufgenommen und das Bild anschließend an einen Computer übermittelt, der dann entsprechende virtuelle Modelle in dem übermittelten Bild platziert.

Die DE 10 2005 047 481 A1 beschreibt ein System und Verfahren zur Kalibrierung optischer Sensoren, insbesondere für Augmented Reality Systeme. Dabei werden zwei Trackingsysteme zueinander und zu einem weiteren Koordinatensystem in Bezug gebracht. Aus diesen Beziehungen werden anschließend entsprechende Kalibrierungswerte berechnet.

Ferner ist aus der DE 10 2005 060 980 A1 ein Verfahren und System zu Bestimmung eines dreidimensionalen Raums gegenüber einer realen Umgebung bekannt.

In bekannten Augmented Reality Systemen besteht jedoch das Problem der sogenannten Verdeckung, falls ein oder mehrere reale Objekte nicht, nicht vollständig oder nicht permanent sichtbar sind. Hierzu ist es bereits bekannt, die realen Objekte in der zu augmentierenden Szene mit entsprechenden virtuellen Modellen zu hinterlegen, so dass beispielsweise eine Berührung zweier wenigstens in einem Kollisionsbereich verdeckter realer Objekte anhand der Durchdringung der zugeordneten virtuellen Modelle erfassbar ist.

Die Hinterlegung der virtuellen Modelle erfolgt bislang dadurch, dass die entsprechenden virtuellen Modelle direkt in einem Videobild der zu augmentierenden Szene mit einer Maus oder einer 3D-Eingabeeinrichtung derart platziert werden, dass die Modelle deckungsgleich mit den realen Objekten im Videobild ausgerichtet sind. Definiert man also bezüglich eines realen Objektes und des zugehörigen virtuellen Modells je ein körperfestes Koordinatensystem, wobei das objektfeste Koordinatensystem relativ zu dem Objekt und das modellfeste Koordinatensystem relativ zu dem Modell dieselbe Position, i.e. Lage und Orientierung aufweist, muss mit anderen Worten das modellfeste Koordinatensystem mit dem objektfesten Koordinatensystem in Übereinstimmung gebracht werden.

Dazu muss der Anwender sechs Freiheitsgrade des virtuellen Modells, nämlich drei translatorische Freiheitsgrade, die dessen Lage beschreiben, und drei rotatorische Freiheitsgrade, die seine Orientierung angeben, gleichzeitig beeinflussen.

Dieses Verfahren erfordert jedoch einen sehr hohen Trainingsaufwand des Benutzers. Zudem liefert es kein reproduzierbares oder quantifizierbares Ergebnis, da die Ausrichtung der Modelle alleine anhand des visuellen Eindrucks des jeweiligen Benutzers erfolgt.

Aus dem Aufsatz J-Y. Herve et al., "Dynamic Registration for Augmented Reality in Telerobotics Applications", IEEE Conf. on Systems, Man and Cybernetics, Nashville, 2000, ist ein Verfahren nach dem Oberbegriff des Anspruchs 1 bekannt, bei dem zur Kalibrierung einer Kamera virtuelle Marker eines virtuellen Robotermodells mit realen Markern auf einem realen Roboter abgeglichen werden.

In R. Bischoff et al., "Persoectives on Augmented Reality Based Human-Robot Interaction with Industrial Robots", Proc. IEEE Conf. On Intelligent Robots and Systems, Sendai, 2004, werden kubische Marker in einem Augmented Reality System vorgeschlagen.

Um den Feldwinkel einer Bilderfassungsvorrichtung, die ein Bild eines realen Raums, der einen Merkmalspunkt mit bekannter realen Position im realen Raum aufweist, zu korrigieren, wird in der US 2005/0159916 A1 in dem Bild die Position des Merkmalpunktes (reale Markerposition) erfasst. Dann wird die Position berechnet, die sich ergibt, wenn der reale Raum aus einem virtuellen Blickpunkt betrachtet wird, der durch die gemessene Position und Orientierung und den gemessenen Feldwinkel der Bilderfassungsvorrichtung spezifiziert ist (virtuelle Markerposition). Korrekturwerte der Position und Orientierung und des Feldwinkels werden so berechnet, dass eine Abweichung zwischen der realen und der virtuellen Markerposition minimiert wird.

Um Überlagerungsfehler in einer video-basierten Augmented Reality zu messen, schlägt die US 2005/0215879 A1 vor, ein virtuelles Objekt zu kreieren, das ein Modell eines Testobjekts ist, Bilder von Kontrollpunkten an dem Testobjekt in verschiedenen Positionen innerhalb eines Messraums eines Augmented Reality-Systems aufzunehmen, daraus Positionen von Kontrollpunkten an dem Testobjekt zu extrahieren, die Positionen der Kontrollpunkte im virtuellen Bild zu berechnen, und positionelle Abweichungen zwischen Positionen der entsprechenden Kontrollpunkte zwischen den Video- und virtuellen Bilder des Testobjekts zu berechnen.

Es ist daher eine Aufgabe der vorliegenden Erfindung, die Ausrichtung eines virtuellen Modells an einem realen Objekt zu vereinfachen.

Diese Aufgabe wird durch ein Verfahren mit den Merkmalen des Anspruchs 1 gelöst. Anspruch 12 stellt ein entsprechendes System zur Durchführung eines erfindungsgemäßen Verfahrens unter Schutz, die Ansprüche 13, 14 Mittel zur computergestützten Umsetzung des Verfahrens.

Ein Verfahren zur Ausrichtung eines virtuellen Modells an einem realen Objekt nach der vorliegenden Erfindung ist insbesondere für eine sogenannte erweiterte Realität ("Augmented Reality") vorgesehen, die sich aus einem Bild einer realen Umgebung mit einem oder mehreren realen Objekten und diesem Bild überlagerten virtuellen Informationen zusammensetzt. Das virtuelle Modell ist vorzugsweise eine für ein Augmented Reality System geeignete Repräsentation des realen Objekts, wobei das Modell bevorzugt wenigstens im Wesentlichen die gleiche Außenkontur aufweist wie das reale Objekt. Gleichermaßen können jedoch auch andere virtuelle Modelle, die beispielsweise eine unverformte Referenz- oder eine gewünschte Sollkonfiguration des realen Objektes, auf das reale Objekt wirkende berechnete und/oder gemessene Kräfte, Koordinatensysteme oder dergleichen angeben, an dem realen Objekt ausgerichtet werden. Die vorliegende Erfindung ist dabei nicht auf erweiterte Realitäten beschränkt, sondern kann gleichermaßen beispielsweise in einer Bahnplanung oder Kollisionsvermeidung bei Manipulatoren oder anderen Anwendungen eingesetzt werden, in denen ein virtuelles Modell an einem realen Objekt auszurichten ist. So liegt eine bevorzugte Anwendung in der Modellierung, Simulation, Planung, Optimierung und/oder Regelung eines Manipulators oder einer automatisierten Produktionsanlage.

An dem realen Objekt ist ein separater oder in das Objekt integrierter realer Marker angeordnet. Dieser kann gleichermaßen permanent, also dauerhaft, oder temporär, insbesondere lösbar an dem Objekt befestigt sein. Hierzu kann der reale Marker auf das reale Objekt beispielsweise aufgedruckt, aufgespritzt, angeklebt, angeschraubt, verrastet, geklemmt oder auch nur unter Eigengewicht aufgesetzt sein.

Der reale Marker ist relativ zu dem Objekt ausgerichtet, so dass die Position eines gedachten, durch den Marker definierten Koordinatensystems relativ zu dem realen Objekt, insbesondere zu einem objektfesten Koordinatensystem festgelegt ist. Beispielsweise kann der reale Marker eckig ausgebildet sein und so auf einer bestimmten Fläche des Objektes platziert werden, dass zwei einander in einer Ecke schneidende Kanten des Markers mit zwei Kanten der Fläche fluchten und die von den Kanten eingeschlossene Ecke des Markers auf einer Ecke der Fläche liegt.

Nun wird erfindungsgemäß eine Position des realen, an dem Objekt angeordneten und relativ zu diesem ausgerichteten Markers in einem Weltkoordinatensystem erfasst. Mit Weltkoordinatensystem wird dabei ein Bezugssystem für das reale Objekt, beispielsweise ein Bezugssystem der zu augmentierenden Szene oder eines zu simulierenden Manipulators, insbesondere ein umgebungsfestes Koordinatensystem bezeichnet.

Zuvor, anschließend oder parallel werden das virtuelle Modell und ein dem realen Marker zugeordneter virtueller Marker, der bevorzugt dasselbe Aussehen, insbesondere dieselbe Kontur, Textur und/oder Farbe aufweist wie der reale Marker, relativ zueinander entsprechend der Position des realen Markers relativ zu dem realen Objekt ausgerichtet. Dies kann in einer bevorzugten Ausführung der vorliegenden Erfindung manuell, halbautomatisch oder - vorzugsweise wahlweise - automatisch erfolgen.

Bevorzugt wird hierbei der virtuelle Marker an dem virtuellen Objekt (oder umgekehrt das virtuelle Objekt an dem virtuellen Marker) so ausgerichtet, dass die Position des virtuellen Markers relativ zu dem virtuellen Modell der Position des realen Markers relativ zu dem realen Objekt entspricht, insbesondere mit dieser identisch ist. Ist beispielsweise ein drei-, recht- oder mehreckiger realer Marker mit einer ausgezeichneten Ecke in einer linken vorderen oberen Ecke eines quaderförmigen realen Objektes platziert, wird bevorzugt auch der virtuelle Marker mit der entsprechenden ausgezeichneten Ecke in der linken vorderen oberen Ecke des quaderförmigen virtuellen Modells platziert.

Die Position des virtuellen Markers relativ zu dem virtuellen Modell kann jedoch gegenüber der Position des realen Markers relativ zu dem realen Objekt auch eine bekannte Abweichung aufweisen. Beispielsweise kann die Orientierung des virtuellen Markers relativ zu dem virtuelle Modell gegenüber der Orientierung des realen Markers relativ zu dem realen Objekt auch um einen vorbestimmten Winkel, etwa 90° gedreht sein, wobei solche Offsets im weiteren Verfahren, insbesondere der Ausrichtung des virtuellen an dem realen Marker dann wieder kompensiert werden.

Ist nun der virtuelle Marker an dem realen Marker ausgerichtet, ergibt sich zugleich die gewünschte Ausrichtung des virtuellen Modells an dem realen Objekt. Das virtuelle Modell wird also mithilfe des virtuellen Markers an dem realen Objekt ausgerichtet. Da die Ausrichtung von Markern, die hierzu bevorzugt entsprechende geometrisch, einfacher auszurichtende Konturen aufweisen können, verhältnismäßig einfach ist, ergibt sich so eine vereinfachte Ausrichtung des virtuelle Modells an dem realen Objekt.

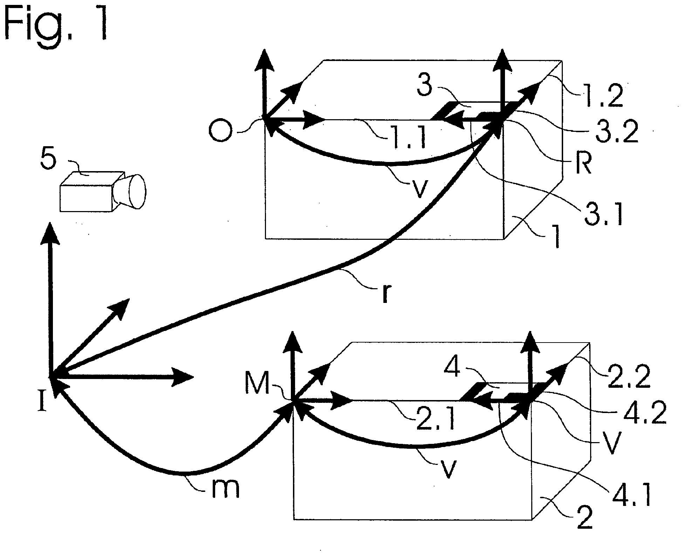

Zur Verdeutlichung lässt sich ein Verfahren nach einer Ausführung der vorliegenden Erfindung mit Bezug auf Fig. 1 auch wie folgt zusammenfassen: Seien für ein reales Objekt und ein virtuelles Modell je ein objekt- bzw. modellfestes Koordinatensystem O bzw. M gegeben, so entspricht die Ausrichtung des virtuellen Modells der Verschiebung und/oder Verdrehung des modellfestes Koordinatensystems M, bis dieses mit dem objektfesten Koordinatensystem O bezüglich der Lage seines Ursprunges und der Orientierung seiner Achsen übereinstimmt. Hierzu wird erfindungsgemäß die Position r eines Koordinatensystems R des realen Markers erfasst, das durch die Transformation v, die eine Verdrehung und/oder Verschiebung beschreibt, in das objektfeste Koordinatensystem O übergeht. Der virtuelle Marker, an den in dem realen Marker entsprechender Weise ein Koordinatensystem V angeheftet ist, und das virtuelle Modell werden relativ zueinander so ausgerichtet, dass das Koordinatensystems V des virtuellen Markers durch dieselbe Transformation v in das modellfeste Koordinatensystem M übergeht. Die gewünschte Transformation m, die der Ausrichtung des virtuellen Modells am realen Objekt entspricht und einem Übergang des modellfesten Koordinatensystems M in das Weltkoordinatensystem vermittelt (und damit die Lage und Orientierung des virtuellen Modells in der zu augmentierenden Szene definiert), ergibt sich dann aus der Hintereinanderschaltung der Transformationen r und v.

In einer ersten Ausführung der vorliegenden Erfindung wird in der zu augmentierenden Szene zunächst der virtuelle Marker an dem Bild des realen Markers ausgerichtet. Dann kann das virtuelle Modell, beispielsweise mit Hilfe einer Maus oder einer anderen Eingabevorrichtung, so verschoben und/oder verdreht werden, dass die Position des virtuellen Markers relativ zu dem virtuellen Modell der Position des realen Markers relativ zu dem realen Objekt entspricht. In einer alternativen zweiten Ausführung der vorliegenden Erfindung wird umgekehrt zunächst der virtuelle Marker, wiederum beispielsweise mit Hilfe einer Maus oder einer anderen Eingabevorrichtung, so verschoben und/oder verdreht, dass die Position des virtuellen Markers relativ zu dem virtuellen Modell, das hierzu bevorzugt in einer gut erkennbaren Referenzposition dargestellt wird, der Position des realen Markers relativ zu dem realen Objekt entspricht. Anschließend kann der virtuelle Marker mit dem daran angehefteten virtuellen Modell automatisch an dem realen Marker ausgerichtet werden, wodurch das Modell automatisch wie gewünscht zu dem Objekt ausgerichtet wird.

An Stelle der manuellen Positionierung des virtuellen Markers mittels Maus oder einer anderen Eingabevorrichtung kann auch eine halbautomatische oder automatische Positionierung erfolgen. Hierzu können beispielsweise Kanten des virtuellen Markers, des virtuellen Objektes und/oder des Bildes des realen Markers und/oder des realen Objektes halb- oder vollautomatisch extrahiert und anschließend, benutzergestützt oder vollautomatisch eine oder mehrere der von den extrahierten Kanten definierten Ecken ausgewählt werden. So kann beispielsweise eine automatische Kantenextraktion sowohl im Bild eines viereckigen realen Markers als auch am virtuellen Marker die den jeweiligen Marker begrenzenden Kanten extrahieren. Der Benutzer kann dann, beispielsweise mittels Maus, eine oder mehrere Ecken im Bilde des realen Markers bzw. des virtuellen Markers auswählen, die durch diese Kanten gebildet werden. Dann kann der Benutzer vorgeben, dass die ausgewählten Ecken von virtuellem und realem Marker einander entsprechen und so den virtuellen Marker relativ zum realen Marker präzise ausrichten.

Die Position des realen Markers kann durch eine optische Einrichtung erfasst werden, die bevorzugt eine oder mehrere Kameras, insbesondere CCD-Kameras, und eine Bildverarbeitungseinrichtung umfasst, um ein von der bzw. den Kameras aufgenommenes Bild weiterzuverarbeiten, insbesondere virtuelle Modelle, Informationen und dergleichen in dem Bild darzustellen. Durch die Bildverabeitungseinrichtung kann insbesondere die Position eines realen Markers, i.e. seine Lage und Orientierung relativ zu einem Weltkoordinatensystem erfasst werden.

Um diese Erfassung zu erleichtern und die Erfassungsqualität zu verbessern, ist der reale Marker bevorzugt entsprechend, i.e. so ausgebildet, dass seine Position von einer Kamera und einer Bildverarbeitungseinrichtung gut erfasst werden kann. Insbesondere kann der reale Marker hierzu eine oder mehrere geometrische Figuren, beispielsweise Punkte, Rechtecke oder dergleichen aufweisen, die relativ zueinander eine vorgegebene Anordnung aufweisen und so die Position eines Koordinatensystems des realen Markers festlegen. Bevorzugt weist der reale Marker stark kontrastierende Abschnitte, insbesondere Abschnitte in Komplementärfarben, Hell/Dunkel oder in Schwarz/Weiß auf. Solche geometrischen Figuren oder andere durch die Bildverarbeitung erfassbaren Kodierungen können vorteilhaft auch den jeweiligen realen Marker identifizieren. Dies ist besonders dann vorteilhaft, wenn in einer bevorzugten Ausführung der vorliegenden Erfindung an mehreren, insbesondere an allen realen Objekten einer zu augmentierenden Szene je ein realer Marker angeordnet wird, um an diesen Objekten je ein virtuelles Modell auszurichten.

Zusätzlich oder alternativ kann die Position des realen Markers beispielsweise mittels eines Manipulators dadurch erfasst werden, dass ausgezeichnete Punkte, Linien und/oder Ebenen des realen Markers mit dem Manipulator, etwa einem Taster oder anderen Werkzeug des Manipulators, angefahren und ihre Lage im Weltkoordinatensystem bestimmt werden. So kann beispielsweise bei einem flachen, rechteckigen realen Marker zunächst eine seiner Ecken angefahren und ihre Lage als Ursprung eines markerfesten Koordinatensystems abgespeichert werden. Anschließend wird eine hierzu benachbarte Ecke angefahren und die Gerade durch diese beiden Ecken als eine Achse des markerfesten Koordinatensystems abgespeichert. Danach wird eine weitere Ecke des realen Markers mit dem Manipulator angefahren, die zusammen mit der vorher abgespeicherten Achse des markerfesten Koordinatensystems eine Ebene des markerfesten Koordinatensystems definiert, in der die zweite Achse des markerfesten Koordinatensystems liegt und auf der die dritte Achse des markerfesten Koordinatensystems senkrecht steht. Auf diese Weise kann die Position des realen Markers sehr einfach und präzise erfasst werden.

Wie vorstehend ausgeführt, werden der virtuelle Marker und das virtuelle Modell relativ zueinander bevorzugt so ausgerichtet, dass die Position des virtuellen Marker relativ zu dem virtuellen Modell der Position des realen Markers relativ zu dem realen Objekt entspricht, insbesondere mit dieser identisch ist. Insbesondere hierzu ist es vorteilhaft, den virtuellen Marker so auszubilden, dass er eine für das Augmented Reality System geeignete Repräsentation des realen Markers darstellt, i.e. diesem insbesondere in seiner Kontur, Texturierung und dergleichen entspricht, um dem Anwender die Zuordnung der einzelnen Paare virtueller und realer Marker zu erleichtern. Dies erhöht auch die intuitive Anwendbarkeit des Verfahrens, ist jedoch nicht zwingend - alternativ können realer und virtueller Marker sich voneinander beispielsweise in ihrer Kontur unterscheiden. Beispielsweise kann ein virtueller Marker in Form eines Koordinatensystems ausgebildet sein, dessen Achsen mit Kanten des zugeordneten realen Markers übereinstimmen.

Der reale und/oder virtuelle Marker weist in der vorliegenden Erfindung wenigstens zwei miteinander einen bestimmten Winkel einschließende Kanten auf. Der eingeschlossene Winkel kann beispielsweise in einem Bereich zwischen 30° und 150°, bevorzugt zwischen 60° und 120° liegen und besonders bevorzugt 90° betragen. Es hat sich gezeigt, dass Anwender Kanten und insbesondere Ecken an einem Objekt bzw. Modell besonders einfach und präzise ausrichten können. Zusätzlich können der reale und/oder virtuelle Marker auch gekrümmte Abschnitte aufweisen, deren Krümmung bevorzugt einer Krümmung des realen Objektes bzw. virtuellen Modells entspricht - auch hier kann eine präzise und einfache Ausrichtung durch Überlagerung der gleich gekrümmten Abschnitte von Marker und Objekt bzw. Modell realisiert werden.

In einer bevorzugten Ausführung der vorliegenden Erfindung wird der reale und/oder virtuelle Marker entsprechend des realen Objektes bzw. virtuellen Modells gewählt oder generiert, so dass Marker und Objekt bzw. Modell wenigstens teilweise übereinstimmende Konturen aufweisen. Hierzu können beispielsweise mittels Kantenextraktion die Konturen des Objektes bzw. Modells erfasst werden. Solche Marker lassen sich besonders einfach und präzise positionieren. Weist beispielsweise ein reales Objekt oder ein diesem nachgebildetes virtuelles Modell eine ebene, zum Beispiel ellipsenförmige Oberfläche auf, kann ein realer Marker mit entsprechender ellipsenförmiger Kontur gut auf dem Objekt, ein virtueller Marker mit entsprechender ellipsenförmiger Kontur gut auf dem Bilde des Objekts bzw. dem virtuellen Modell positioniert werden.

Besonders einfach wird die Ausrichtung des jeweiligen Markers an dem Objekt bzw. Modell, wenn dieses wenigstens zwei einander in einer Ecke schneidende Kanten aufweist. Dann kann der reale Marker so an dem realen Objekt angeordnet ist, dass wenigstens eine Kante des Markers parallel zu einer Kante des Objekts ausgerichtet ist, insbesondere mit dieser fluchtet bzw. der virtuelle Marker und das virtuelle Modell relativ zueinander derart ausgerichtet werden, dass wenigstens eine Kante des Markers parallel zu einer Kante des Modells ausgerichtet ist, insbesondere mit dieser fluchtet.

Fluchten eine Marker- und eine Objekt- bzw. Modellkante miteinander, verbleibt zwischen Marker und Objekt bzw. Modell noch der Drehfreiheitsgrad um diese Kante und der translatorische Freiheitsgrad entlang dieser Kante. Fluchten eine weitere Marker- und eine Objekt- bzw. Modellkante miteinander, die mit der anderen Kante einen Winkel ungleich Null einschließen, ist der Marker an dem Objekt bzw. Modell eindeutig ausgerichtet. Erfindungsgemäß ist der reale bzw. virtuelle Marker daher so an dem realen Objekt bzw. virtuellen Modell ausgerichtet, dass wenigstens zwei Kanten des Markers, die miteinander einen bestimmten Winkel einschließen, parallel zu zwei Kanten des Objekts bzw. Modells ausgerichtet sind, insbesondere mit diesen fluchten. Insbesondere hierzu kann ein virtueller und/oder realer Marker mehr- insbesondere rechteckig ausgebildet sein. Gleichermaßen kann anstelle der zweiten Kante auch die Ecke selber verwendet werden, also der reale bzw. virtuelle Marker so an dem realen Objekt bzw. virtuellen Modell ausgerichtet werden, dass eine Kante und eine Ecke des Markers mit einer Kante und einer Ecke des Objekts bzw. Modells ausgerichtet sind, insbesondere mit diesen fluchten. Bevorzugt liegt hierzu der Marker auf einer ebenen Oberfläche des Objekts bzw. Modells auf.

In einem erfindungsgemäßen System zur Ausrichtung eines virtuellen Modells an einem realen Objekt ist eine Ausrichteeinrichtung zur Durchführung eines vorstehend beschriebenen erfindungsgemäßen Verfahrens vorgesehen. Diese Ausrichteeinrichtung umfasst Funktionseinheiten zur Durchführung einzelner oder mehrerer Verfahrensschritte des erfindungsgemäßen Verfahrens, beispielsweise eine oder mehrere Kameras zur Aufnahme des realen Objektes, eine Anzeigeeinrichtung zur Darstellung der zu augmentierenden Szene, des virtuellen Markers und/oder Modells, das optische System zur Erfassung der Position des realem Markers, eine Eingabeeinrichtung zur Ausrichtung des virtuellen Markers und Modells relativ zueinander und/oder eine Recheneinheit zur teil- oder vollautomatischen Ausrichtung des virtuellen Markes an dem realen Marker in der zu augmentierenden Szene.

Weitere Aufgaben, Merkmale und Vorteile der vorliegenden Erfindung ergeben sich aus den Unteransprüchen und den nachfolgenden Ausführungsbeispielen. Hierzu zeigt, teilweise schematisiert:
- Fig. 1: eine zu augmentierende Szene mit einem realen Objekt und dessen noch nicht ausgerichtetem virtuellen Modell; und
- Fig. 2A-D: eine Abfolge von Schritten nach einer Ausführung der vorligenden Erfindung.

In Fig. 1 ist schematisch eine zu augmentierende Szene dargestellt, wie sie beispielsweise auf einer (nicht dargestellten) Anzeigeeinrichtung eines Systems nach einer Ausführung der vorliegenden Erfindung zu Beginn der Durchführung eines Verfahrens nach einer Ausführung der vorliegenden Erfindung dargestellt wird.

In einem realen Raum, der durch ein Weltkoordinatensystem I angedeutet ist, befindet sich ein reales Objekt 1, welches die Form eines Quaders aufweist und sich aufgrund seiner Ecken daher besonders gut für das erfindungsgemäße Verfahren eignet. Bezüglich des Quaders 1 ist zur Vereinfachung der nachfolgenden Beschreibung ein objektfestes Koordinatensystem O mit Ursprung in einer Ecke des Quaders (links vorne oben in Fig. 1) und zu rechtwinkelig aufeinader stehenden Kanten 1.1, 1.2 des Quaders 1 parallelen Koordinatenachsen definiert.

In einer dem Ursprung des objektfesten Koordinatensystems O gegenüberliegenden Ecke des Quaders 1 ist ein rechteckiger realer Marker 3 angeordnet, bezüglich dessen ein Koordinatensystem R derart definiert ist, dass sein Ursprung in einer ausgezeichneten Ecke des Markers 3 liegt und Koordinatenachsen mit zwei aufeinander senkrecht stehenden Kanten 3.1, 3.2 des Markers 3 fluchten. Eine durch einen Pfeil angedeutete Transformation v überführt die Koordinatensysteme O und R ineinander und beschreibt so die Position des Koordinatensystems R relativ zu O, i.e. die Lage seines Ursprungs und seine Orientierung gegenüber O.

Der reale Marker 3 ist dabei an dem realen Objekt 1 so ausgerichtet, dass seine beiden den Ursprung des Koordinatensystems R einschließenden Kanten 3.1, 3.2 mit zwei zu Koordinatenachsen des objektfesten Koordinatensystems O parallelen Kanten 1.1 bzw. 1.2 des Quaders 1 fluchten und die Ecke des Markers 3 auf der durch diese beiden Kanten 1.1, 1.2 definierten Ecke des Quaders 1 liegt (rechts vorne oben in Fig. 1).

Hierzu ist der reale Marker 3 als flexible Folie ausgebildet und magnetisch an dem Quader 1 befestigt. Dabei kann ein Anwender die Kanten 1.1, 1.2 und 3.1, 3.2 bzw. die hierdurch eingeschlossenen Ecken auch manuell einfach und präzise aneinander ausrichten.

Eine Kamera 5 nimmt das reale Objekt 1 und den darauf angeordneten realen Marker 3 auf, deren Bilder auf einer Anzeigeeinrichtung (nicht dargestellt) wiedergeben werden und einen Teil der augmentierten Szene bilden. Eine in die Kamera 5 implementierte (nicht dargestellte) Bildverarbeitung erfasst dabei die Position r des Markers 3, i.e. bestimmt die Transformation r, die das markerfeste Koordinatensystem R und das Weltkoordinatensystem I ineinander überführt.

Um dies zu erleichtern, weist der reale Marker 3 eine Reihe von einfachen geometrischen Figuren in Form von dunklen Rechtecken auf, die so zueinander orientiert auf die helle Folie aufgedruckt sind, dass die Orientierung des Markers 3 relativ zum Weltkoordinatensystem I von der Bildeverarbeitung besonders einfach bestimmt werden kann.

In einer Abwandlung wird die Position r des Markers 3 durch einen (nicht dargestellten) Manipulator erfasst, indem eine Werkzeugspitze, deren Position relativ zu dem Weltkoordinatensystem I, das gleichzeitig das Bezugssystem des Manipulators bildet, aufgrund der Gelenkwinkel des Manipulators bekannt ist, zunächst an die in Fig. 1 rechte vordere Ecke des realen Markers 3 geführt wird. Diese Position der Werkzeugspitze wird als Ursprung des markerfesten Koordinatensystems R abgespeichert. Anschließend wird die Werkzeugspitze an die rechte hintere Ecke des realen Markers 3 geführt und die Gerade durch diese beiden Ecken als x-Achse des markerfesten Koordinatensystems R abgespeichert. Dann wird die Werkzeugspitze an die in Fig. 1 linke vordere Ecke des realen Markers 3 geführt und die Ebene, in der diese Ecke und die x-Achse liegen, als x-y-Ebene des markerfesten Koordinatensystems R gewählt. Die z-Achse des markerfesten Koordinatensystems R ergibt sich dann als die Gerade durch den Ursprung, die auf dieser x-y-Ebene senkrecht steht, die y-Achse als die auf der x- und z-Achse senkrecht stehende Gerade.

Der Quader 1 soll in der erweiterten Realität nun mit einem virtuellen Modell 2 hinterlegt werden, dessen Konturen, i.e. Form und Abmessungen im Wesentlichen mit dem Quader 1 übereinstimmen. Hierzu soll das virtuelle Modell 2 an dem realen Objekt 1 ausgerichtet werden, so dass beide die gleiche Position im Raum aufweisen. Mit anderen Worten soll das virtuelle Modell 2 in der erweiterten Realität so platziert werden, dass ein dem objektfesten Koordinatensystem O entsprechendes modellfestes Koordinatensystem M, welches man sich an der entsprechenden Ecke an dem virtuelle Modell 2 angeheftet denkt, mit dem objektfesten Koordinatensystem O übereinstimmt.

Hierzu wird gemäß des Verfahrens nach der Ausführung der vorliegenden Erfindung zunächst das virtuelle Modell 2 in der Anzeigeeinrichtung (nicht dargestellt) in einer gut sicht-und handhabbaren Position, beispielsweise einer Bildschirmmitte dargestellt. Zugleich wird in ebenfalls gut sicht- und handhabbaren Position, beispielsweise in einem linken unteren Bildschirmquadranten ein virtueller Marker 4 dargestellt, der in seiner Kontur und geometrischen Texturierung dem realen Marker 3 entspricht.

Nun wird durch den Anwender mittels einer nicht dargestellten Eingabeeinrichtung, beispielsweise einer Maus oder einem Spaceball, der virtuelle Marker 4 so an dem virtuellen Modell 2 ausgerichtet, dass seine Position relativ zu dem Modell der bekannten Position des realen Markers 3 relativ zu dem realen Objekt 1 entspricht, im Ausführungsbeispiel der vorderen oberen rechten Ecke des Quaders. Mit anderen Worten wird der virtuelle Marker 4 in der zu augmentierenden Szene so an dem virtuellen Modell 2 ausgerichtet, dass ein dem Koordinatensystem R entsprechendes Koordinatensystem V des virtuellen Markers 4 durch dieselbe Transformation v in das modellfeste Koordinatensystem M überführt wird, die auch das Koordinatensystem R des realen Markers 3 in das Koordinatensystem O überführt.

Wie bereits bei der Ausrichtung des realen Markers 3 am realen Objekt 1 ist auch die Ausrichtung des virtuellen Markers 4 am virtuellen Modell 2 durch den Anwender aufgrund der rechteckigen Form der Marker sehr einfach und präzise möglich, es müssen nur die beiden Kanten 4.1, 4.2 des virtuellen Markers 4 mit den entsprechenden Kanten 2.1, 2.2 des virtuellen Modells zur Flucht gebracht werden, was auch auf einem Bildschirm gut möglich ist. Bevorzugt kann hierzu während der Ausrichtung des Markers am Modell zwischen verschiedenen Ansichten, insbesondere in eine plane Draufsicht auf die von den Kanten 4.1, 4.2 aufgespannte Ebene des Markers 4 umgeschaltet werden (nicht dargestellt).

Ist der virtuelle Marker 4 an dem virtuellen Modell 2 ausgerichtet, so kann dieses nun automatisch an dem realen Objekt 1 ausgerichtet werden, indem sozusagen der virtuelle Marker 4 mit daran angeheftetem virtuellen Modell 2 mit dem realen Marker 3 zur Deckung gebracht wird. Da die Positionen des (erfassten) realen Markers 3 und des (durch bekannte Eingaben des Anwender verschobenen und/oder verdrehten) virtuellen Markers 4 in der erweiterten Realität jeweils bekannt sind, kann das Systems nach der Ausführung der vorliegenden Erfindung dies automatisch durchführen. Mit anderen Worten ergibt sich aus der erfassten Position r des realen Markers 3 und der durch die Ausrichtung am Objekt bzw. Modell vorgegebenen Position v des Markers relativ zu einem objekt- bzw. modellfesten Koordinatensystem O bzw. M auch die gewünschte Transformation m, die das modellfeste Koordinatensystem M so in das Weltkoordinatensystem überführt, dass das virtuelle Modell 2 mit dem realen Objekt 1 bezüglich seiner Position in der erweiterten Realität übereinstimmt. In diesem Zusammenhang sei darauf hingewiesen, dass die Transformation von einem ersten in ein zweites Koordinatensystem natürlich stets die gegebenenfalls gewünschte Transformation von dem zweiten in das erste Koordinatensystem wenigstens implizit definiert, so dass jede der oben erläuterten Transformationsrichtungen bei Bedarf auch umgedreht sein kann.

In einer Abwandlung wird der virtuelle Marker 4 nicht an dem virtuellen Objekt 2 ausgerichtet, sondern konstant in der durch die Bildverarbeitungseinrichtung erfassten Position r des realen Markers 3 gehalten, i.e. deckt sich mit dem Bild des realen Markers 3. In diesem Fall wird das virtuelle Modell 2 relativ zum virtuellen Marker 4 so ausgerichtet, dass sich die oben erläuterte Ausrichtung ergibt.

Gegenüber dem eingangs dargestellten Ausführungsbeispiel weist die Abwandlung den Vorteil einer unmittelbaren, intuitiven Kontrolle der Ausrichtung auf, da nach erfolgter Ausrichtung des virtuellen Modells 2 zum virtuellen Marker 4 das Modell 2 zugleich korrekt zu dem realen Objekt 1 ausgerichtet ist. Gegenüber der Abwandlung weist hingegen das eingangs dargestellte Ausführungsbeispiel den Vorteil auf, dass der virtuelle Marker 4 einfacher an dem Modell 2 ausgerichtet werden kann.

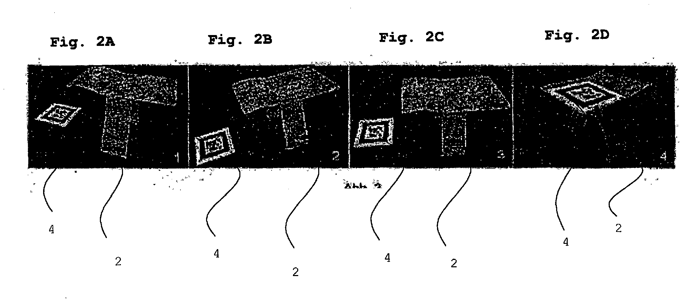

In der Figurenfolge Fig. 2A bis Fig. 2D ist exemplarisch die Anzeige des Systems nach einer abgewandelten Ausführung der vorliegenden Erfindung während des Ausrichtens dargestellt. Man erkennt, wie der virtuelle Marker 4, der aus einer hellen Folie mit einer Mehrzahl dunkler geometrischer Strukturen besteht, zu dem virtuellen Modell 2 in Form eines Tisches ausgerichtet wird, indem zwei Kanten des Markers 4 an zwei Kanten des Tisches 2 ausgerichtet werden. Ist der virtuelle Marker 4 an dem Tisch 2 ausgerichtet (Fig. 2D), werden beide zusammen in der erweiterten Realität an einem realen Tisch ausgerichtet, indem der virtuelle Marker 4, dessen durch die Eingaben des Anwenders während der Ausrichtung am virtuellen Tisch 2 bestimmte Position bekannt, zusammen mit dem angehefteten virtuellen Tisch 2 in die durch die Bildverarbeitung erfasste Position des zugeordneten realen Markers überführt wird.

### Bezugszeichenliste

- 1: reales Objekt
- 1.1, 1.2: Kante des realen Objektes
- 2: virtuelles Modell ;
- 2.1, 2.2: Kante des virtuellen Modelles
- 3: realer Marker
- 3.1, 3.2: Kante des realen Markers
- 4: virtueller Marker
- 4.1, 4.2: Kante des virtuellen Markers
- 5: Kamera
- I: Weltkoordinatensystem
- O: objektfestes Koordinatensystem
- M: modellfestes Koordinatensystem
- R: Koordinatensystem des realen Markers
- V: Koordinatensystem des virtuellen Markers
- m: Transformation zwischen System I und System M
- r: Transformation zwischen System I und System R
- v: Transformation zwischen System M und System V

## Patentansprüche

1. Verfahren zur Ausrichtung eines virtuellen Modells (2) an einem realen Objekt (1) durch Verschiebung und/oder Verdrehung eines modellfesten Koordinatensystems (M), bis dieses mit einem objektfesten Koordinatensystem (O) bezüglich der Lage seines Ursprungs und der Orientierung seiner Achsen übereinstimmt, wobei an dem realen Objekt ein realer Marker (3) angeordnet ist, mit den Schritten:
- Ausrichten des realen Markers an dem realen Objekt, so dass die Position, das heißt Lage und Orientierung, eines Koordinatensystems (R) des realen Markers relativ zu dem realen Objekt festgelegt ist;
- Erfassen einer Position (r) des Koordinatensystems (R) des realen Markers (3), das durch eine Transformation (v), die eine Verdrehung und/oder Verschiebung beschreibt, in das objektfeste Koordinatensystem (O) übergeht; und
- Ausrichten des virtuellen Modells und eines dem realen Marker zugeordneten virtuellen Markers (4) relativ zueinander entsprechend der Position des realen Markers relativ zu dem realen Objekt, indem der virtuelle Marker mit Hilfe einer Maus oder einen anderen Eingabevorrichtung so verschoben und/oder verdreht wird, dass die Position des virtuellen Markers relativ zu dem virtuellen Modell der Position des realen Markers relativ zu dem realen Modell entspricht oder demgegenüber eine bekannte Abweichung aufweist und ein dem Koordinatensystem (R) des realen Markers entsprechendes Koordinatensystem (V) des virtuellen Markers durch dieselbe Transformation (v) in das modellfeste Koordinatensystem (M) überführt wird, die auch das Koordinatensystem (R) des realen Markers (3) in das objektfestes Koordinatensystem (O) überführt.

2. Verfahren nach Anspruch 1, **gekennzeichnet durch** den Schritt:
- Ausrichten des virtuellen Markers an dem realen Marker.

3. Verfahren nach einem der vorhergehenden Ansprüche, **dadurch gekennzeichnet, dass** das virtuelle Modell relativ zu dem virtuellen Marker ausgerichtet wird.

4. Verfahren nach einem der vorhergehenden Ansprüche 1 bis 2, **dadurch gekennzeichnet, dass** der virtuelle Marker relativ zu dem virtuellen Modell ausgerichtet wird.

5. Verfahren nach einem der vorhergehenden Ansprüche, **dadurch gekennzeichnet, dass** die Position (r) des realen Markers durch eine optische Einrichtung oder durch einen Manipulator oder durch eine optische Einrichtung und einen Manipulator erfasst wird.

6. Verfahren nach Anspruch 5, **dadurch gekennzeichnet, dass** die optische Einrichtung eine Kamera (5) und eine Bildverarbeitungseinrichtung umfasst.

7. Verfahren nach einem der vorhergehenden Ansprüche, **dadurch gekennzeichnet, dass** die Position (v) des virtuellen Marker relativ zu dem virtuellen Modell der Position des realen Markers relativ zu dem realen Objekt entspricht.

8. Verfahren nach einem der vorhergehenden Ansprüche, **dadurch gekennzeichnet, dass** der reale Marker oder der virtuelle Marker oder der reale Marker und der virtuelle Marker jeweils wenigstens zwei miteinander einen bestimmten Winkel einschließenden Kanten (3.1, 3.2; 4.1, 4.2) aufweist.

9. Verfahren nach Anspruch 8, **dadurch gekennzeichnet, dass** der reale Marker so an dem realen Objekt angeordnet ist, dass wenigstens eine Kante (3.1, 3.2) des Markers parallel zu einer Kante (1.1, 1.2) des Objekts ausgerichtet ist, insbesondere mit dieser fluchtet; oder
dass der virtuelle Marker und das virtuelle Modell relativ zueinander derart ausgerichtet werden, dass wenigstens eine Kante (4.1, 4.2) des Markers parallel zu einer Kante (2.1, 2.2) des Modells ausgerichtet ist, insbesondere mit dieser fluchtet; oder dass
der reale Marker so an dem realen Objekt angeordnet ist, dass wenigstens eine Kante (3.1, 3.2) des Markers parallel zu einer Kante (1.1, 1.2) des Objekts ausgerichtet ist, insbesondere mit dieser fluchtet, und der virtuelle Marker und das virtuelle Modell relativ zueinander derart ausgerichtet werden, dass wenigstens eine Kante (4.1, 4.2) des Markers parallel zu einer Kante (2.1, 2.2) des Modells ausgerichtet ist, insbesondere mit dieser fluchtet.

10. Verfahren nach Anspruch 9, **dadurch gekennzeichnet, dass** der reale Marker so an dem realen Objekt angeordnet ist, dass wenigstens zwei Kanten des Markers, die miteinander einen bestimmten Winkel einschließen, parallel zu zwei Kanten des Objekts ausgerichtet sind, insbesondere mit diesen fluchten; oder
dass der virtuelle Marker und das virtuelle Modell relativ zueinander derart ausgerichtet werden, dass wenigstens zwei Kanten des Markers parallel zu zwei Kanten des Modells ausgerichtet sind, insbesondere mit diesen fluchten; oder dass
der reale Marker so an dem realen Objekt angeordnet ist, dass wenigstens zwei Kanten des Markers, die miteinander einen bestimmten Winkel einschließen, parallel zu zwei Kanten des Objekts ausgerichtet sind, insbesondere mit diesen fluchten, und der virtuelle Marker und das virtuelle Modell relativ zueinander derart ausgerichtet werden, dass wenigstens zwei Kanten des Markers parallel zu zwei Kanten des Modells ausgerichtet sind, insbesondere mit diesen fluchten.

11. Verfahren nach einem der vorhergehenden Ansprüche,
**dadurch gekennzeichnet, dass** das reale Objekt wenigstens zwei einander in einer Ecke schneidende Kanten (1.1, 1.2) aufweist.

12. System zur Ausrichtung eines virtuellen Modells (2), an einem realen Objekt (1), wobei an dem realen Objekt ein realer Marker (3) angeordnet ist, mit einer Ausrichteeinrichtung zur Durchführung eines Verfahrens nach einem der vorhergehenden Ansprüche.

13. Computerprogramm, das alle Schritte eines Verfahrens nach einem der Ansprüche 1 - 11 ausführt, wenn es auf einem Rechengerät abläuft.

14. Computerprogrammprodukt mit Programmcode, der auf einem maschinenlesbaren Träger gespeichert ist, zur Durchführung des Verfahrens nach einem der Ansprüche 1 - 11, wenn das Programm auf einem Computer oder Steuergerät ausgeführt wird.

## Claims

1. A method of orienting a virtual model (2) with respect to a real object (1) by translating and/or rotating a coordinate system (M) fixed with respect to the model until it coincides, as regards the location of its origin and the orientation of its axes, with a coordinate system fixed with respect to the object (O), wherein a real marker (3) is arranged on the real object, the method comprising the steps of:
- orienting the real marker with respect to the real object so that the position, i.e. the location and orientation of a coordinate system (R) of the real marker, is fixed with respect to the real object;
- capturing a position (r) of the coordinate system (R) of the real marker (3), which transitions into the coordinate system (O) that is fixed with respect to the object by means of a transformation (v) which describes a rotation and/or a translation; and
- orienting the virtual model and a virtual marker (4) associated with the real marker relative to each other corresponding to the position of the real marker with respect to the real object by translating and/or rotating the virtual marker with the aid of a mouse or a different input device in such a way that the position of the virtual marker with respect to the virtual model corresponds to the position of the real marker with respect to the real model or exhibits a known deviation therefrom and a coordinate system (V) of the virtual marker corresponding to the coordinate system (R) of the real marker is transitioned into the coordinate system (M) fixed with respect to the model by the same transformation (v) which also transitions the coordinate system (R) of the real marker (3) into the coordinate system (O) which is fixed with respect to the object.

2. The method according to claim 1, **characterized by** the step of:
- orienting the virtual marker with respect to the real marker.

3. The method according to any one of the preceding claims, **characterized in that** the virtual model is oriented with respect to the virtual marker.

4. The method according to any one of the preceding claims 1 to 2, **characterized in that** the virtual marker is oriented with respect to the virtual model.

5. The method according to any one of the preceding claims, **characterized in that** the position (r) of the real marker is detected by means of an optical device, or by means of a manipulator, or by means of an optical device and a manipulator.

6. The method according to claim 5, **characterized in that** the optical device comprises a camera (5) and an image processing device.

7. The method according to any one of the preceding claims, **characterized in that** the position (v) of the virtual marker with respect to the virtual model corresponds to the position of the real marker with respect to the real object.

8. The method according to any one of the preceding claims, **characterized in that** the real marker or the virtual marker, or the real marker and the virtual marker, each comprises at least two edges (3.1, 3.2; 4.1, 4.2) including a certain angle.

9. The method according to claim 8, **characterized in that** the real marker is arranged on the real object in such a way that at least one edge (3.1, 3.2) of the marker is oriented in a direction parallel to an edge (1.1, 1.2) of the object, and in particular that it is aligned therewith; or
that the virtual marker and the virtual model are oriented with respect to each other in such a way that at least one edge (4.1, 4.2) of the marker is oriented in a direction parallel to an edge (2.1, 2.2) of the model, and in particular that it is aligned therewith; or that
the real marker is arranged on the real object in such a way that at least one edge (3.1, 3.2) of the marker is oriented in a direction parallel to an edge (1.1, 1.2) of the object, and in particular that it is aligned therewith, and the virtual marker and the virtual model are oriented with respect to each other in such a way that at least one edge (4.1, 4.2) of the marker is oriented in a direction parallel to an edge (2.1, 2.2) of the model, and in particular that it is aligned therewith.

10. The method according to claim 9, **characterized in that** the real marker is arranged on the real object in such a way that at least two edges of the marker, which include a specific angle with each other, are oriented in directions parallel to two edges of the object, and in particular that they are aligned therewith; or
that the virtual marker and the virtual model are oriented with respect to each other in such a way that at least two edges of the marker are oriented in directions parallel to two edges of the model, and in particular that they are aligned therewith; or that
the real marker is arranged on the real object in such a way that at least two edges of the marker, which include a specific angle with each other, are oriented in directions parallel to two edges of the object, and in particular that they are aligned therewith, and the virtual marker and the virtual model are oriented with respect to each other in such a way that at least two edges of the marker are oriented in directions parallel to two edges of the model, and in particular that they are aligned therewith.

11. The method according to any one of the preceding claims, **characterized in that** the real object comprises at least two edges (1.1, 1.2) which intersect at a corner.

12. A system for orienting a virtual model (2) with respect to a real object (1), wherein a real marker (3) is arranged on the real object, the system comprising an orientation device for carrying out a method according to any one of the preceding claims.

13. A computer program which performs all steps of a method according to any one of the claims 1 to 11 when it is executed on a computing device.

14. A computer program product with program code which is stored on a machine-readable medium, for carrying out the method according to any one of the claims 1 to 11 when the program is executed on a computer or a control device.

## Revendications

1. Procédé destiné à aligner un modèle virtuel (2) sur un objet réel (1) par déplacement et/ou torsion d'un système de coordonnées de modèle fixe (M), jusqu'à ce que celui-ci coïncide avec un système de coordonnées d'objet fixe (O) par rapport à l'emplacement de son origine et à l'orientation de ses axes, dans lequel un marqueur réel (3) est agencé au niveau de l'objet réel, avec les étapes de :
- alignement du marqueur réel sur l'objet réel, de sorte que la position, autrement dit l'emplacement et l'orientation, d'un système de coordonnées (R) du marqueur réel est définie par rapport à l'objet réel ;
- détection d'une position (r) du système de coordonnées (R) du marqueur réel (3), qui passe par une transformation (v), qui décrit une torsion et/ou un déplacement, dans le système de coordonnées d'objet fixe (O) ; et
- alignement du modèle virtuel et d'un marqueur virtuel (4) associé au marqueur réel l'un par rapport à l'autre en fonction de la position du marqueur réel par rapport à l'objet réel, par déplacement et/ou torsion du marqueur virtuel à l'aide d'une souris ou d'un autre dispositif de saisie de sorte que la position du marqueur virtuel par rapport au modèle virtuel correspond à la position du marqueur réel par rapport au modèle réel ou présente un écart connu par rapport à celui-ci et un système de coordonnées (V) du marqueur virtuel correspondant au système de coordonnées (R) du marqueur réel passe par cette même transformation (v) dans le système de coordonnées de modèle fixe (M), qui fait également passer le système de coordonnées (R) du marqueur réel (3) dans le système de coordonnées d'objet fixe (O).

2. Procédé selon la revendication 1, **caractérisé par** l'étape de :
- alignement du marqueur virtuel sur le marqueur réel.

3. Procédé selon l'une quelconque des revendications précédentes, **caractérisé en ce que** le modèle virtuel est aligné par rapport au marqueur virtuel.

4. Procédé selon l'une quelconque des revendications précédentes 1 à 2, **caractérisé en ce que** le marqueur virtuel est aligné par rapport au modèle virtuel.

5. Procédé selon l'une quelconque des revendications précédentes, **caractérisé en ce que** la position (r) du marqueur réel est détectée par un dispositif optique ou par un manipulateur ou par un dispositif optique et un manipulateur.

6. Procédé selon la revendication 5, **caractérisé en ce que** le dispositif optique comprend une caméra (5) et un dispositif de traitement d'image.

7. Procédé selon l'une quelconque des revendications précédentes, **caractérisé en ce que** la position (v) du marqueur virtuel par rapport au modèle virtuel correspond à la position du marqueur réel par rapport à l'objet réel.

8. Procédé selon l'une quelconque des revendications précédentes, **caractérisé en ce que** le marqueur réel ou le marqueur virtuel ou le marqueur réel et le marqueur virtuel présentent respectivement au moins deux arêtes (3.1, 3.2 ; 4.1, 4.2) formant l'une avec l'autre un angle déterminé.

9. Procédé selon la revendication 8, **caractérisé en ce que** le marqueur réel est agencé au niveau de l'objet réel de sorte qu'au moins une arête (3.1, 3.2) du marqueur est alignée parallèlement à une arête (1.1, 1.2) de l'objet, en particulier est en alignement avec celle-ci ; ou
**que** le marqueur virtuel et le modèle virtuel sont alignés l'un par rapport à l'autre de sorte qu'au moins une arête (4.1, 4.2) du marqueur est alignée parallèlement à une arête (2.1, 2.2) du modèle, en particulier est en alignement avec celle-ci ; ou que
le marqueur réel est agencé au niveau de l'objet réel de sorte qu'au moins une arête (3.1, 3.2) du marqueur est alignée parallèlement à une arête (1.1, 1.2) de l'objet, en particulier est en alignement avec celle-ci, et le marqueur virtuel et le modèle virtuel sont alignés l'un par rapport à l'autre de sorte qu'au moins une arête (4.1, 4.2) du marqueur est alignée parallèlement à une arête (2.1, 2.2) du modèle, en particulier est en alignement avec celle-ci.

10. Procédé selon la revendication 9, **caractérisé en ce que** le marqueur réel est agencé au niveau de l'objet réel de telle sorte qu'au moins deux arêtes du marqueur, qui forment l'une avec l'autre un angle déterminé, sont alignées parallèlement à deux arêtes de l'objet, en particulier sont en alignement avec celles-ci ; ou
**que** le marqueur virtuel et le modèle virtuel sont alignés l'un par rapport à l'autre de sorte qu'au moins deux arêtes du marqueur sont alignées parallèlement à deux arêtes du modèle, en particulier sont en alignement avec celles-ci ; ou que
le marqueur réel est agencé au niveau de l'objet réel de sorte qu'au moins deux arêtes du marqueur, qui forment l'une avec l'autre un angle déterminé, sont alignées parallèlement à deux arêtes de l'objet, en particulier sont en alignement avec celles-ci, et que le marqueur virtuel et le modèle virtuel sont alignés l'un par rapport à l'autre de sorte qu'au moins deux arêtes du marqueur sont alignées parallèlement à deux arêtes du modèle, en particulier sont en alignement avec celles-ci.

11. Procédé selon l'une quelconque des revendications précédentes, **caractérisé en ce que** l'objet réel présente au moins deux arêtes (1.1, 1.2) se coupant l'une l'autre dans un coin.

12. Système destiné à aligner un modèle virtuel (2), sur un objet réel (1), dans lequel un marqueur réel (3) est agencé au niveau de l'objet réel, avec un dispositif d'alignement pour la réalisation d'un procédé selon l'une quelconque des revendications précédentes.

13. Programme informatique, qui effectue toutes les étapes d'un procédé selon l'une quelconque des revendications 1-11, lorsqu'il est exécuté sur un calculateur.

14. Produit de programme informatique avec code de programme, qui est enregistré sur un support lisible par machine, pour la réalisation du procédé selon l'une quelconque des revendications 1-11, lorsque le programme est exécuté sur un ordinateur ou un appareil de commande.
